# EUROPÄISCHE PATENTSCHRIFT

(11) **EP 3 473 779 B1**
(45) Veröffentlichungstag und Bekanntmachung des Hinweises auf die Patenterteilung: **24.03.2021**
(21) Anmeldenummer: 17197751.5
(22) Anmeldetag: 23.10.2017
(51) Int. Cl.: E04B 1/76, F16B 5/02, F16B 7/18, F16B 39/12

(54) **VERBINDUNGSELEMENT MIT FESTSTELLELEMENT SOWIE VERFAHREN ZUM FESTSTELLEN DES VERBINDUNGSELEMENTS**
FIXING DEVICE FOR CONNECTING MEANS, AND A METHOD FOR FIXING
DISPOSITIF DE FIXATION POUR MOYEN DE FIXATION AINSI QUE PROCÉDÉ DE FIXATION

(43) Veröffentlichungstag der Anmeldung: 24.04.2019
(73) Patentinhaber: Bangratz, René, 74076 Heilbronn (DE)
(72) Erfinder: Bangratz, René, 74076 Heilbronn (DE)
(74) Vertreter: Wimmer, Stephan

(56) Entgegenhaltungen:
- WO-A1-2017/153049
- FR-A1- 2 954 374
- US-A1- 2005 050 818

## Beschreibung

Die Erfindung betrifft ein Verbindungselement mit einem Feststellelement sowie ein Verfahren zum Feststellen des Verbindungselements.

### Stand der Technik

Bekannt sind Vorrichtungen zur Befestigung von Bauelementen an Wänden, beispielsweise an Häuserwänden von wärmegedämmten Bauten.

Die EP 0 921 252 B1 offenbart ein Befestigungselement zur Abstandsbefestigung von Latten, Profilen oder Platten an einem festen Untergrund, bestehend aus einem am Untergrund festlegbaren Bolzen, der an dem in der bestimmungsgemäßen Lage vom Untergrund frei auskragenden Ende einen Gewindeabschnitt aufweist, und einer auf den Gewindeabschnitt aufschraubbaren Halterung, wobei der Bolzen mit zumindest an seinen beiden Endbereichen ausgebildeten Gewindeabschnitten versehen ist und im Bereich zwischen den beiden Gewindeabschnitten einen Werkzeugangriff für ein Eindrehwerkzeug aufweist, wobei ein Gewindeabschnitt als Holzgewinde und der andere als Maschinengewinde ausgeführt ist und unterhalb des Werkzeugangriffs ein scheibenartiger Bund ausgebilbildet ist, der Laschen für die Latten, Profile oder Platten aufweist, sowie eine mit einem Innengewinde versehenen Hülse, die eine Lasche oder Winkellasche aufweist.

Die EP 0 086 751 A2 offenbart einen auf Zug beanspruchten Anker. Der Anker dient der Verbindung von zwei aneinander anschließenden Bauteilen, z.B. eines Balkon-, Lift- oder Treppenhaus-Anbaues an einem außen wärmeisolierten Haus oder Hochhaus. Er weist eine in den einen Bauteil einzulassenden Hülse und eine im anderen Bauteil einzulassenden Zugstab auf, der in der Hülse elastisch nachgiebig verankert ist und beim Auftreten einer Zugkraft um eine begrenzte Wegstrecke unter Zusammendrückung von Tellerfedern aus der Hülse auswandert.

Die FR 2 954 374 A1 betrifft eine Tragkonstruktion für eine Plattform, wie z.B. ein Balkon oder eine Terrasse, die zur Befestigung an einer Fassadenkonstruktion mit einem Gehäuse vorgesehen ist. Gemäß der Erfindung umfasst die genannte Stützvorrichtung einen Befestigungsteil, der als Rohr ausgebildet ist, das zum einen an seinen Enden mit Mitteln zur Unterstützung der Befestigung an der Fassade vorgesehen ist, und zum anderen ein weiteres Rohr, das mit seinen Enden ein Stützelement aufweist, wobei die beiden Rohre gegeneinander verriegelt oder verriegelbar sind. Die Haltevorrichtung umfasst einen wärmeisolierenden Körper, der zwischen den Rohren der Befestigungs- und Stützteil angeordnet ist.

Die US 2005/050818 A1 zeigt eine Einstellvorrichtung. Die Einstellvorrichtung für einen erhöhten Boden umfasst ein Gewinderohr mit einem Innengewinde zum Verbinden mit einem Verbindungsloch, das sich auf dem erhöhten Boden befindet. Das Gewinderohr ist mit einem Fußsitz und einer Befestigungsschraube, die oberhalb des Fußes montiert ist, mit einem Gewinde verbunden. Der Fußsitz weist an seinem oberen Ende eine Verstellöffnung auf und die Befestigungsschraube weist eine von oben nach unten verlängerte Durchgangsbohrung auf, die größer ist als die Verstellöffnung des Fußsitzes, so dass das Verstellwerkzeug durch die Durchgangsbohrung verlängert und in die Verstellöffnung eingelegt werden kann, um die Verschiebung des Profilrohres gegenüber dem Fußsitz einzustellen. Die Einstellvorrichtung kann die Bruttohöhe des Hubbodens effektiv reduzieren und die Platzverschwendung reduzieren.

Die WO 2017/153049 A1 offenbart eine wärmegedämmte Gebäudewand mit einem Abstandshalter zur nachträglichen außenseitigen Befestigung eines Funktions-Teiles, beispielswiese eines Vordaches, wobei die Befestigung über den Abstandshalter durch die Wärmedämmung hindurch erfolgt und der Abstandshalter mit einer Gewindestange oder einem Anker in die Gebäudewand greift, und wobei ein Verstärker vorgesehen ist, der an der Gebäudewand anliegt, wenn die Gewindestange in der Gebäudewand sitzt. Der Verstärker weist an der Berührungsfläche mit der Gebäudewand mindestens den drei- bis fünffachen Außendurchmesser wie die Gewindestange auf.

Die WO 2017/153049 A1 offenbart ein Verbindungselement nach dem Oberbegriff des Anspruchs 1.

Nachteilig an den bekannten Vorrichtungen ist, dass eine für die Anbringung von Bauelementen an wärmegedämmten Fassaden vorteilhafte Längenverstellbarkeit sowie eine dafür sinnvolle Sicherung der Haltekraft nicht zur Verfügung gestellt wird.

Aufgabe der Erfindung ist es daher, eine Vorrichtung zur Verfügung zu stellen, die eine Lagesicherung für die verstellbaren Elemente einer Verbindungseinrichtung ermöglicht sowie ein entsprechendes Verfahren zum Verbinden von Elementen der Verbindungseinrichtung zur festen Fixierung eines Verbindungselements an den Untergrund bereitzustellen.

### Offenbarung der Erfindung

Es wird ein Verbindungselement mit einem Feststellelement sowie ein Verfahren zum Feststellen einer Länge des Verbindungselements offenbart.

Das Verbindungselement ist mehrteilig ausgebildet und weist ein Grundelement, ein Aufsatzelement sowie eine Verstellmöglichkeit der Länge des gesamten Verbindungselements auf. Des Weiteren weist das Verbindungselement ein Sicherungselement zur Feststellung und zum Sichern der Länge des Verbindungselements auf.

Es wird ein Grundelement an eine Tragkonstruktion insbesondere einer Gebäudewand mit einem Befestigungsmittel angebracht. Die Befestigung erfolgt mit einem oder mehreren Befestigungsmitteln. Die Befestigungsmittel können Schrauben oder andere geeignete Befestigungsmittel sein.

In ein Aufsatzelement wird ein Sicherungselement eingeführt. Dies erfolgt dadurch, dass das Sicherungselement eingeschoben, eingesteckt oder eingeschraubt wird. Das Aufsatzelement weist beispielsweise zur Schraubverbindung ein Innengewinde und das Sicherungselement ein Außengewinde auf. Das Einführen kann manuell oder mit einem geeigneten Montagemittel erfolgen.

Nach dem Einbringen des Sicherungselements wird das Aufsatzelement auf das Grundelement aufgebracht. Dies erfolgt insbesondere dadurch, dass das Grundelement ein Außengewinde und das Aufsatzelement ein Innengewinde aufweist und die beiden Elemente durch Aufschrauben des Aufsatzelements auf das Grundelement erfolgt. Die gewünschte Länge der Verbindung ist durch die variable Einschraubtiefe des Aufsatzelements in das Grundelement festlegbar. Ein Einbringen kann auch mittels Aufschieben bei Vorhandensein von mindestens einer Nut im Grund- und Aufsatzelement erfolgen. Das Sicherungselement kann zur Lagesicherung eingeschoben werden.

Nach der Festlegung der ausgewählten Länge wird das Sicherungselement insbesondere mit einem Montagemittel in Richtung des Grundelements verdreht. Sobald das Sicherungselement am Grundelement anliegt, verspannen sich die beiden Elemente, das Grund- und das Sicherungselement, über die Kontaktflächen. Hierdurch wird die Lagesicherung des Aufsatzelements am Grundelement bewirkt. Ein weiteres Verdrehen des Aufsatzelements wird dadurch verhindert. Die Einschraubtiefe ist variabel durch die Wahl der Kontaktierung innerhalb des Bereichs der variablen Einschraubtiefe.

Die Lagesicherung erfolgt reversibel, d.h. dass das Sicherungselement wieder aus seiner Position gelöst werden kann und dann die Länge des gesamten Verbindungselements neu eingestellt werden kann.

Das Aufsatzelement Z weist an seinem oberen, distalen, also von der Tragkonstruktion abweisenden Ende eine Öffnung für das spätere Eindrehen oder Durchstecken eines wählbaren Befestigungsmittels auf, beispielsweise für Anbauelemente. Diese Öffnung kann als Rund- oder Langloch ausgebildet sein. In diese Öffnung wird Hammerkopfschraube eingeführt J Diese kann durch Verdrehen der Schraube um 90° gegen Herausziehen bzw. -fallen gesichert werden. Dabei können eine Unterlegscheibe sowie eine Befestigungsmutter zum Einsatz kommen.

Die erfindungsgemäße Vorrichtung hat dabei den Vorteil, dass das Verbindungselement längenverstellbar ist, um an die unterschiedlichen Anforderungen aufgrund der unterschiedlichen Stärken des Dämmmaterials insbesondere einer Gebäudewand angepasst werden zu können. Diese Festlegung der Länge des Verbindungselements kann durch das erfindungsgemäße Sicherungselement in der Lage gesichert werden, so dass sich die einzelnen Elemente des Verbindungselements nicht mehr gegenseitig verdrehen können.

Weitere Vorteile und vorteilhafte Ausgestaltungen der Erfindung sind der nachfolgenden Figurenbeschreibung, den Zeichnungen und den Ansprüchen entnehmbar.

Nachfolgend werden Ausführungsbeispiele hand der beigefügten schematischen Zeichnungen näher erläutert. Es zeigt:
- Fig. 1: zeigt die Montage eines Grundelements an eine Tragkonstruktion mit einem Befestigungsmittel,
- Fig. 2: zeigt die Montage des Grundelements an die Tragkonstruktion mit mehreren Befestigungsmitteln,
- Fig. 3: stellt die Montage des Grundelements an eine Tragkonstruktion mit einem integrierten Befestigungsmittel dar,
- Fig. 4: zeigt das Aufsatzelement,
- Fig. 5: stellt das in das Aufsatzelement einzudrehende Sicherungselement dar,
- Fig. 6: zeigt das in das Aufsatzelement eingedrehte Sicherungselement,
- Fig. 7: stellt das Sicherungselement dar,
- Fig. 8: zeigt ein nicht erfindungsgemäßes Aufsatzelement,
- Fig. 9: stellt das in das Aufsatzelement von Fig. 8 Z eingedrehte Sicherungselement dar,
- Fig. 10: stellt das Aufsatzelement mit dem Sicherungselement dar,
- Fig. 11: zeigt das Grundelement, auf das das Aufsatzelement aus Fig. 10 aufgeschraubt wird,
- Fig. 12: stellt die Bestimmung einer einstellbaren Länge durch eine variable Einschraubtiefe des Aufsatzelements in das Grundelement dar,
- Fig. 13: zeigt eine gewählte einstellbare Länge durch die gewählte Einschraubtiefe eines nicht erfindungsgemäßen Z Aufsatzelements in das Grundelement,
- Fig. 14: zeigt die Festlegung der gewählten Länge,
- Fig. 15: zeigt die Feststellung der festgelegten gewählten Länge mit einem Werkzeug,
- Fig. 16: stellt das Verbindungselement mit festgelegter sowie lagegesicherter Länge dar,
- Fig. 17: zeigt das Verbindungselement mit festgelegter sowie lagegesicherter Länge in einem nicht erfindungsgemäßen Ausführungsbeispiel dar,
- Fig. 18: zeigt das Verbindungselement in einem weiteren Ausführungsbeispiel,
- Fig. 19: stellt das Verbindungselement nach mit einem eingeschraubten Anbauelement dar,
- Fig. 20: stellt das nicht erfindungsgemäße Z Verbindungselement nach Fig. Z 17 Z mit einer eingeschraubten Abschlussplatte sowie Gewindebohrungen für Anbauelemente dar, und
- Fig. 21: ist eine Explosionsdarstellung des Verbindungselements.

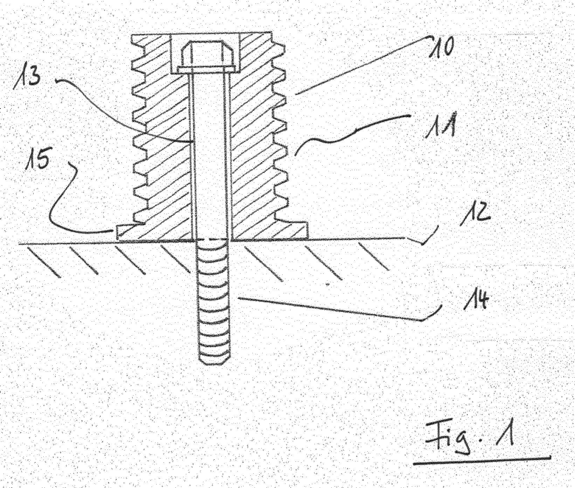

In Fig. 1 ist eine Montage eines Grundelements 10 eines Verbindungselements an eine Tragkonstruktion 12 dargestellt. Das Grundelement 10 weist ein Außengewinde 11 auf, das ein Aufbringen eines später anzubringenden Aufsatzelements ermöglicht. Des Weiteren kann das Grundelement 10 in der Längserstreckung durchgehende oder in einem Teilbereich angeordnete unterschiedliche dicke Bohrungen aufweisen, in diesem Ausführungsbeispiel eine erste durchgehende Bohrung 13. Zur Herstellung der Verbindung mit der Tragkonstruktion 12 wird ein Befestigungsmittel 14 verwendet, in diesem Ausführungsbeispiel eine Schraube 14. Die Tragkonstruktion 12 kann beispielsweise an einer Gebäudewand angebracht sein. Das Grundelement 10 kann an seiner Basis, dem an die Tragkonstruktion 12 anzuordnenden Bereich, breiter ausgebildet sein und einen Fußbereich 15 aufweisen. In diesem Ausführungsbeispiel ist das Befestigungsmittel 14 so ausgebildet, dass es durch das gesamte Grundelement 10 hindurch und dann in die Tragkonstruktion 12 zur Verankerung hineinragt.

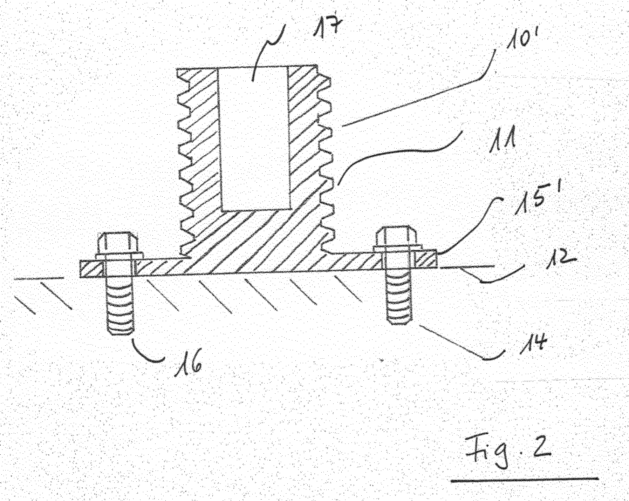

Fig. 2 stellt die Montage des Grundelements 10' des Verbindungselements an die Tragkonstruktion 12 mit mehreren Befestigungsmitteln, einem ersten Befestigungsmittel 14 sowie einem zweiten Befestigungsmittel 16, dar. Der Fußbereich 15 ist so breit ausgebildet, dass er ausreichend Platz zur Anordnung der beiden Befestigungsmittel 14 und 16 aufweist. Das Grundelement 10' weist eine in einem Teilbereich angeordnete Bohrung 17 auf.

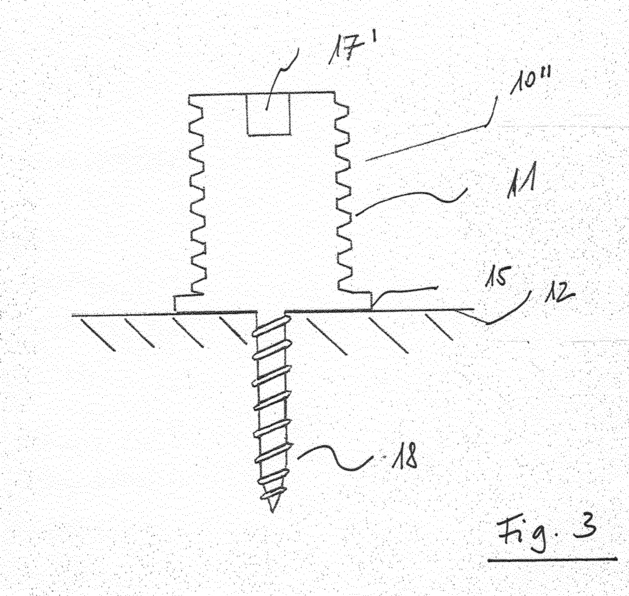

In Fig. 3 ist die Montage des Grundelements 10" an die Tragkonstruktion 12 dargestellt, das in diesem Ausführungsbeispiel ein drittes, in das Grundelement 10 integriertes Befestigungsmittel 18, aufweist, das dadurch einteilig ausgebildet ist. Es ist eine Bohrung 17' ausgebildet.

Es wird zur Montage anfänglich somit das Grundelement 10, 10', 10" an die Tragkonstruktion 12 insbesondere einer Gebäudewand mit mindestens einem Befestigungsmittel 14, 16, 18 angebracht. Die Befestigungsmittel 14, 16, 18 können Schrauben oder andere geeignete Befestigungsmittel 14, 16, 18 sein.

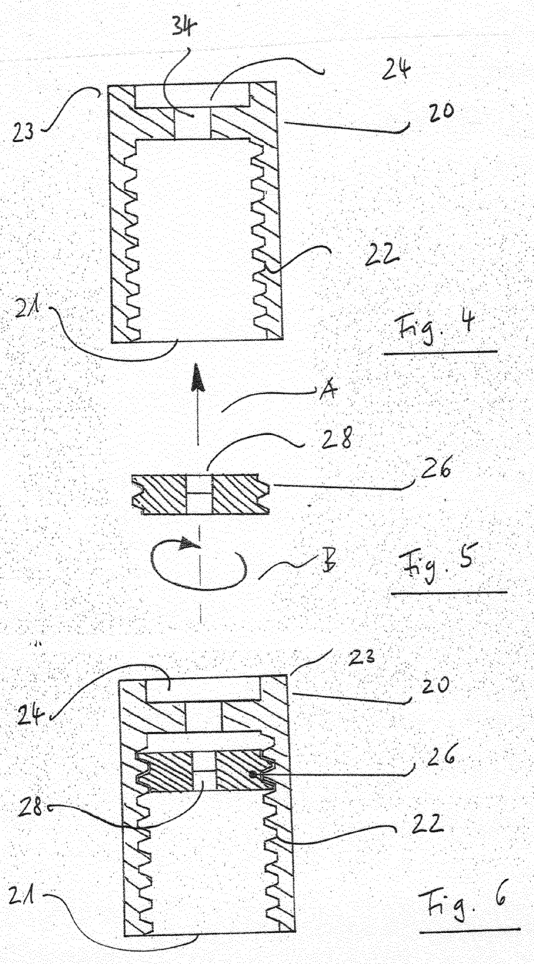

Fig. 4 stellt ein Aufsatzelement 20 dar. Das Aufsatzelement 20 weist in diesem Ausführungsbeispiel ein Innengewinde 22 auf. Das Aufsatzelement 20 hat ein offenes Ende 21. Das Aufsatzelement 20 kann an seinem oberen, distalen, also von der Tragkonstruktion abweisenden Ende 23 eine Öffnung 24 für das spätere Eindrehen oder Durchstecken eines wählbaren Befestigungsmittels aufweisen, beispielsweise für Anbauelemente. Eine weitere Öffnung 34 kann als Rund- oder Langloch ausgebildet sein. In diese Öffnung 34 kann insbesondere eine Hammerkopfschraube eingeführt werden. Diese kann durch Verdrehen der Schraube um 90° gegen Herausziehen bzw. -fallen gesichert werden. Dabei können eine Unterlegscheibe sowie eine Befestigungsmutter zum Einsatz kommen. In das Aufsatzelement 20 soll ein Sicherungselement eingeführt werden, das in der nachfolgenden Figur 5 dargestellt ist.

Fig. 5 zeigt das Sicherungselement 26, das in das Aufsatzelement 20 eingeführt wird. Dies erfolgt dadurch, dass das Sicherungselement 26 eingeschoben, eingesteckt oder eingeschraubt wird. Das Einführen kann manuell oder mit einem geeigneten Montagemittel erfolgen. Das Sicherungselement 26 weist eine dritte, durchgehende Bohrung 28 auf. Der nach oben zeigende gerade Pfeil A zeigt auf die Seite des Aufsatzelements 20, in deren offenes Ende 21 das Sicherungselement 26 eingeschraubt wird. Die Pfeilrichtung B stellt die Drehrichtung in das Innengewinde 22 des Aufsatzelements 20 dar.

In Fig. 6 ist dargestellt, wie das Sicherungselement 26 in das Aufsatzelement 20 eingedreht ist.

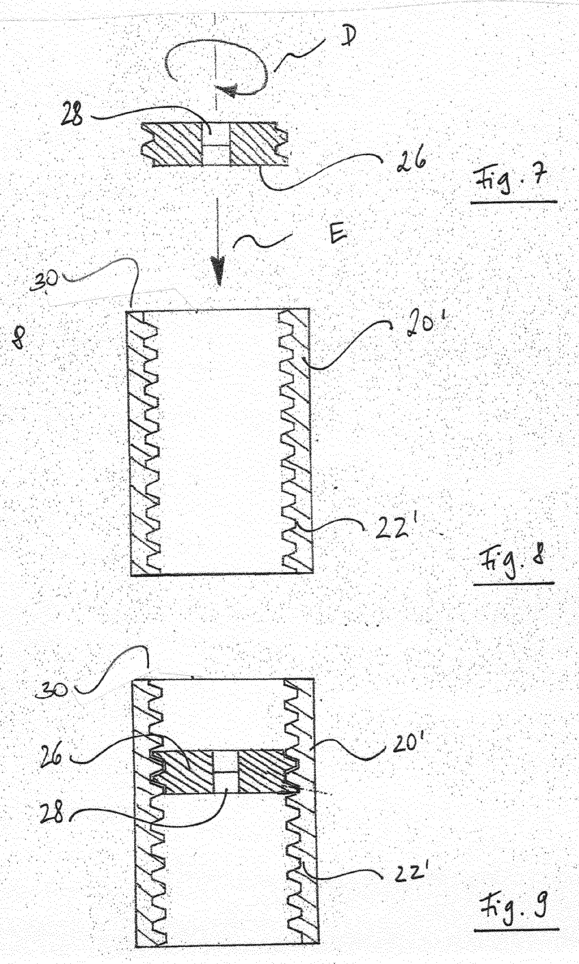

Fig. 7 zeigt das Sicherungselement 26 in einem anderen Ausführungsbeispiel. Der Pfeil D zeigt eine Eindrehrichtung für das Sicherungselement 26, das in das in der Fig. 8 dargestellte Aufsatzelement 20 eingedreht wird. Das Eindrehen erfolgt von Hand oder mit einem geeigneten Montagemittel.

In Fig. 8 ist das nicht erfindungsgemäße Z Aufsatzelement Z 20' mit dem Innengewinde 22 dargestellt. An dessen Ende 30 erfolgt das Einbringen des in Fig. 7 dargestellten Sicherungselements 26.

Fig. 9 stellt dar, wie das Sicherungselement 26 in das Aufsatzelement Z 20' eingebracht ist. Das Sicherungselement 26 ist in das Aufsatzelement 20' eingedreht.

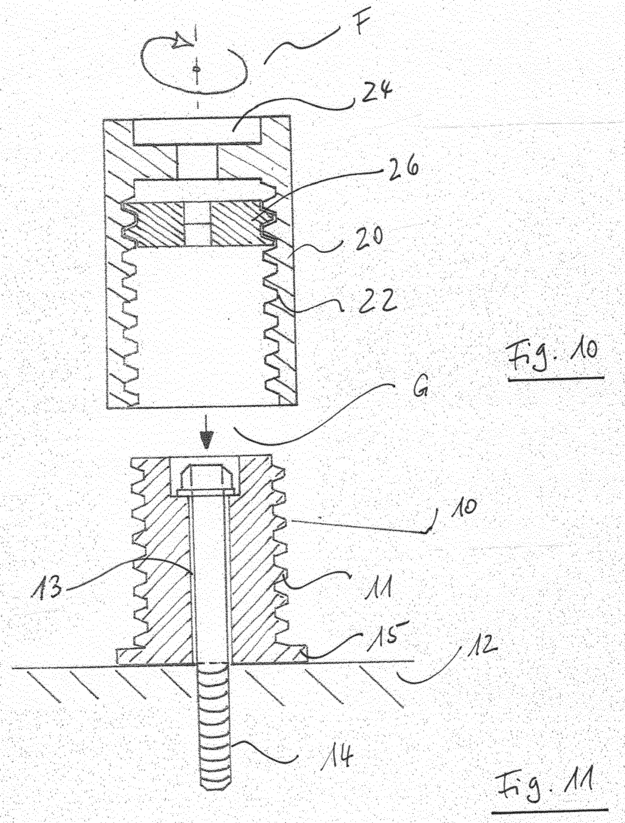

Fig. 10 und Fig. 11 stellen das Einschrauben des Aufsatzelements 20 auf das Grundelement 10 dar. Nach dem Einbringen des Sicherungselements 26 wird das Aufsatzelement 20 auf das Grundelement 10 aufgeschraubt. Dies erfolgt in den gezeigten Ausführungsbeispielen dadurch, dass das Grundelement 10 das Außengewinde 11 und das Aufsatzelement das Innengewinde 22 aufweist und die beiden Elemente 10, 20 durch Aufschrauben des Aufsatzelements 20 auf das Grundelement 10 erfolgt. Die gewünschte Länge der Verbindung ist durch die variable Einschraubtiefe des Aufsatzelements 20 in das Grundelement 10 festlegbar.

Die Fig. 10 zeigt dabei das Aufsatzelement 20, in das bereits das Sicherungselement 26 eingeschraubt ist. Der Pfeil F zeigt die Drehrichtung, in der das Aufsatzelement 20 auf das Grundelement 10, das in Fig. 11 dargestellt ist, aufgeschraubt wird.

In Fig. 11 ist das Grundelement 10 mit seinem Außengewinde 11 dargestellt. Der Pfeil G zeigt die Richtung an, aus der das Aufsatzelement 20 aus Fig. 10 auf dieses Grundelement 10 aufgeschraubt wird.

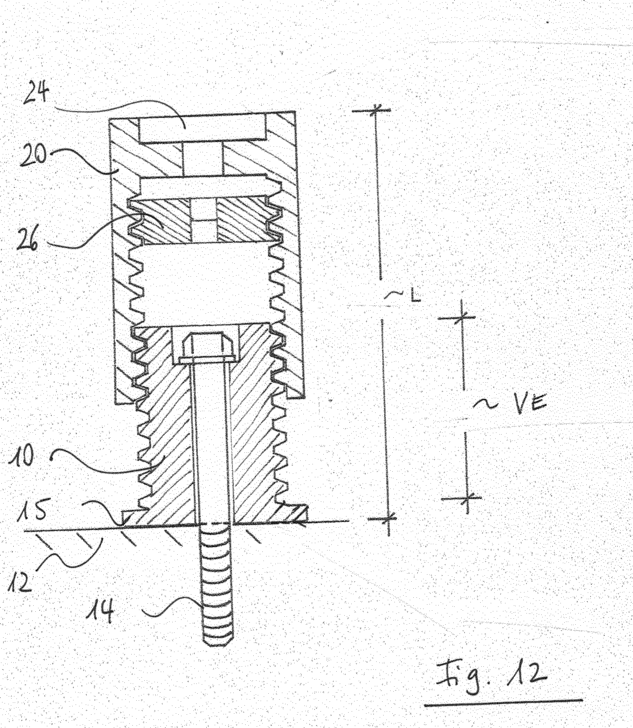

Fig. 12 zeigt die Bestimmung der gewünschten Länge L durch die variable Einschraubtiefe VE des Aufsatzelements 20 auf das Grundelement 10.

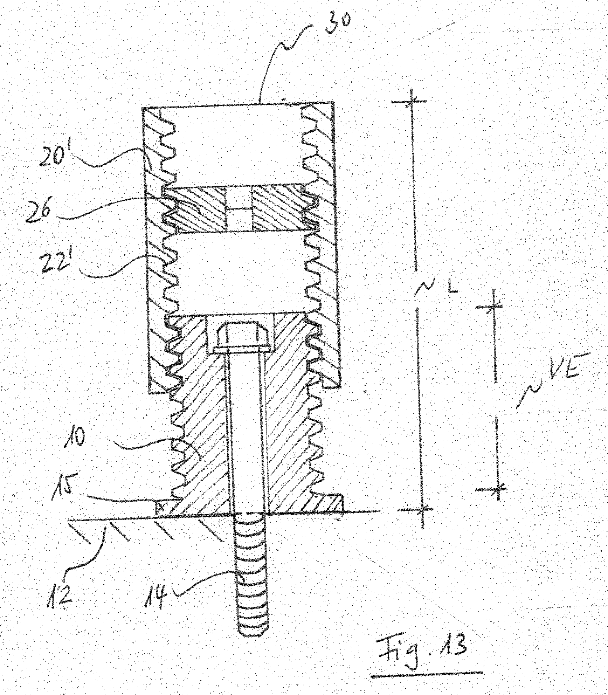

In Fig. 13 ist die Bestimmung der gewünschten Länge L durch die variable Einschraubtiefe VE des nicht erfindungsgemäßen Aufsatzelements 20' in das Grundelement 10 dargestellt.

Das Aufsatzelement 20' wird so weit auf das Grundelement 10 aufgeschraubt, bis die gesamte gewünschte Länge L durch die entsprechend gewählte Einschraubtiefe VE erreicht ist.

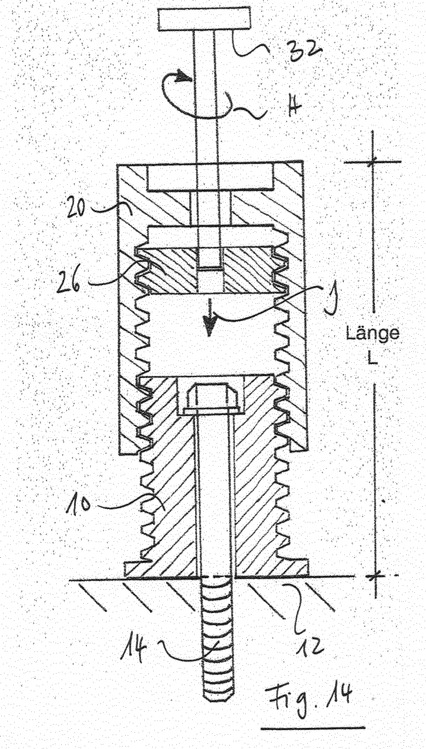

Fig. 14 stellt dar, wie in diesem Ausführungsbeispiel nach Festlegung der endgültigen Länge L das Aufsatzelement 20 mit einem Montagemittel 32 in Drehrichtung H auf das Grundelement 10 aufgeschraubt und somit in Richtung des Pfeils bewegt wird.

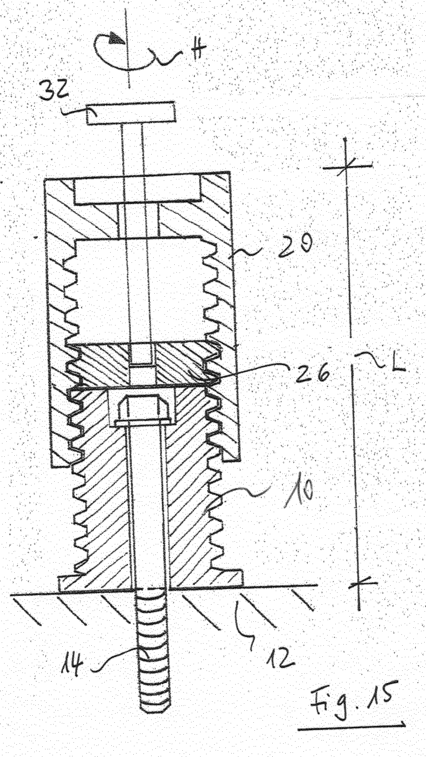

In Fig. 15 ist das Aufsatzelement 20 auf das Grundelement 10 aufgeschraubt. Sobald das Sicherungselement 26 am Grundelement 10 anliegt, verspannen sich die beiden Elemente, das Grund- 10 und das Sicherungselement 26, über die jeweiligen Kontaktflächen. Hierdurch wird die Lagesicherung des Aufsatzelements 20 am Grundelement 10 bewirkt. Ein weiteres Verdrehen des Aufsatzelements 20 wird dadurch verhindert. Eine spätere Lösung des Sicherungselements 26 ermöglicht eine neue Einstellung der Länge L. Die Lagesicherung erfolgt reversibel, d.h. dass das Sicherungselement 26 wieder aus seiner Position gelöst werden kann und dann die Länge L des gesamten Verbindungselements 100 neu eingestellt werden kann.

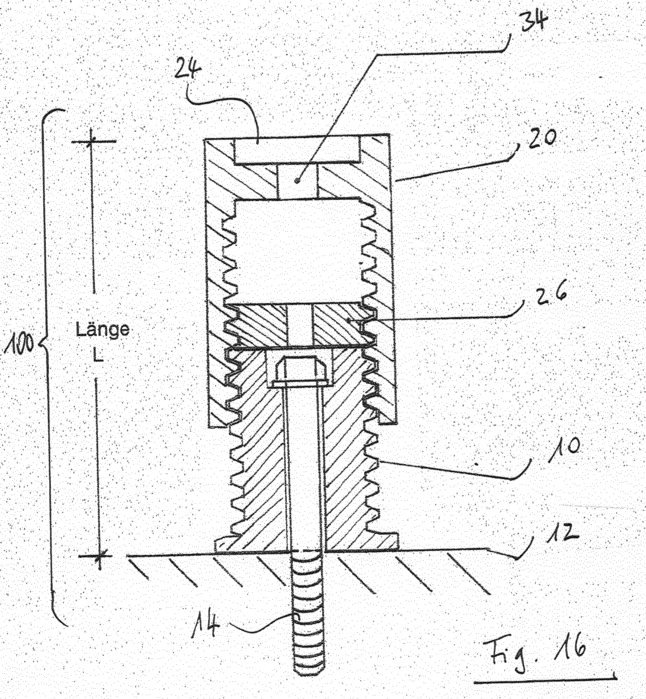

Fig. 16 zeigt ein fertiges, auf die gewünschte Länge L angepasstes und lagegesichtertes Verbindungselement 100. Das Aufsatzelement 20 weist eine Öffnung 34 auf. Derartige Öffnungen 34 können allgemein als Rund- oder Langloch ausgebildet sein. In diesem Ausführungsbeispiel ist die Öffnung 34 als Langloch ausgebildet. Diese Öffnung 34 ist dazu ausgebildet, dass in dieses ein Befestigungsmittel für weitere Anbauelemente eingedreht oder durchgesteckt werden kann. In die Öffnung 34 kann insbesondere eine Hammerkopfschraube eingeführt werden. Diese Hammerkopfschraube kann durch Verdrehen um 90° gegen Herausziehen gesichert werden. Sie kann sowohl in der Längs- als auch in der Querachse verdrehbar sein.

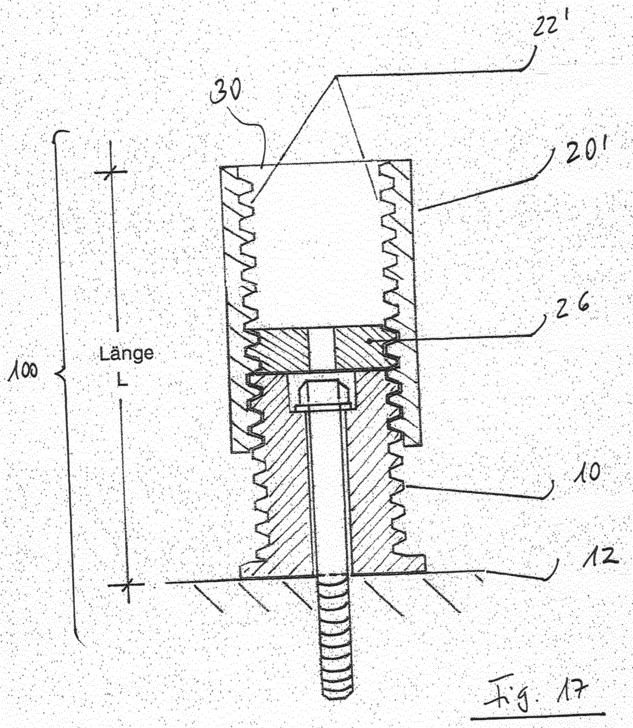

Fig. 17 zeigt ein nicht erfindungsgemäßen Ausführungsbeispiel eines fertigen, auf die gewünschte Länge L angepassten und lagesicherten Verbindungselements 100. Das Aufsatzelement 20' kann des Weiteren in seinem distalen Bereich mit der Öffnung 30 das Innengewinde 22' für das spätere Eindrehen von Befestigungsmitteln oder zusätzlichen Montageplatten, beispielsweise für Anbauelemente, aufweisen. Ein Anbauelement kann beispielsweise ein Befestigungswinkel sein. Es kann auch eine Abschlussplatte eingeschraubt werden. Diese weist Gewindebohrungen zur Befestigung von Anbauelementen auf.

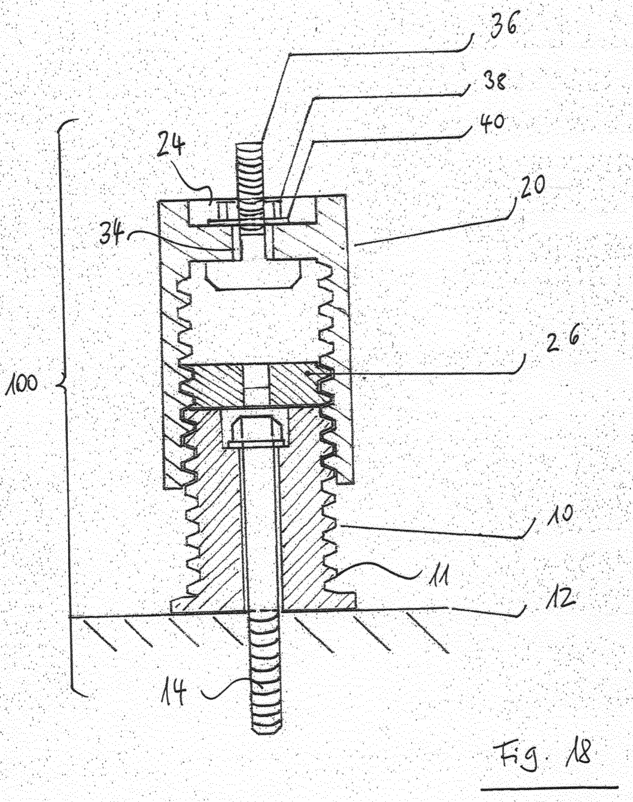

Fig. 18 stellt das fertige, auf die gewünschte Länge angepasste und lagegesicherte Verbindungselement 100 in einem anderen Ausführungsbeispiel dar. In die Öffnung 24 durch die Öffnung 34 führend ist eine Hammerkopfschraube 36 eingeschraubt. Des Weiteren sind eine Mutter 38 sowie eine Unterlegscheibe 40 angeordnet.

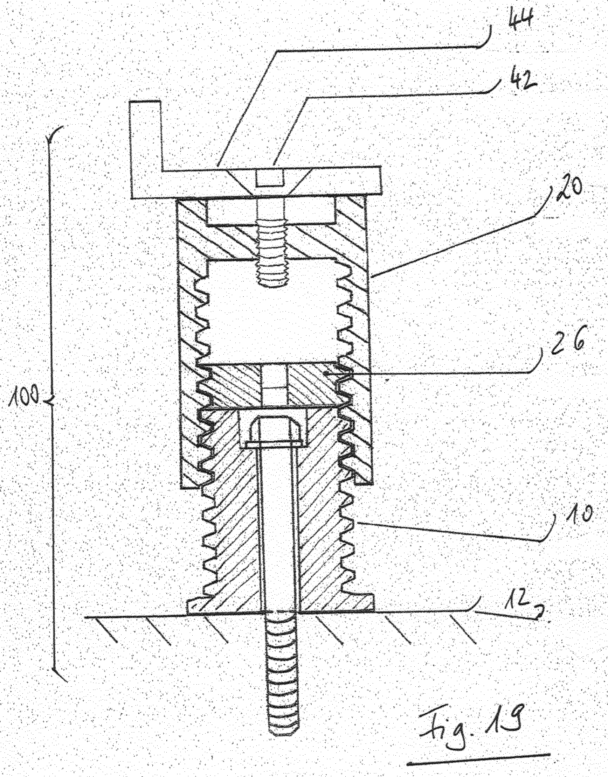

In Fig. 19 ist das fertige, auf die gewünschte Länge angepasste und lagegesicherte Verbindungselement 100 in einem weiteren Ausführungsbeispiel nach Fig. 18 dargestellt. Mit einer Schraube 42 ist ein Befestigungswinkel 44 am Aufsatzelement 20 angeschraubt.

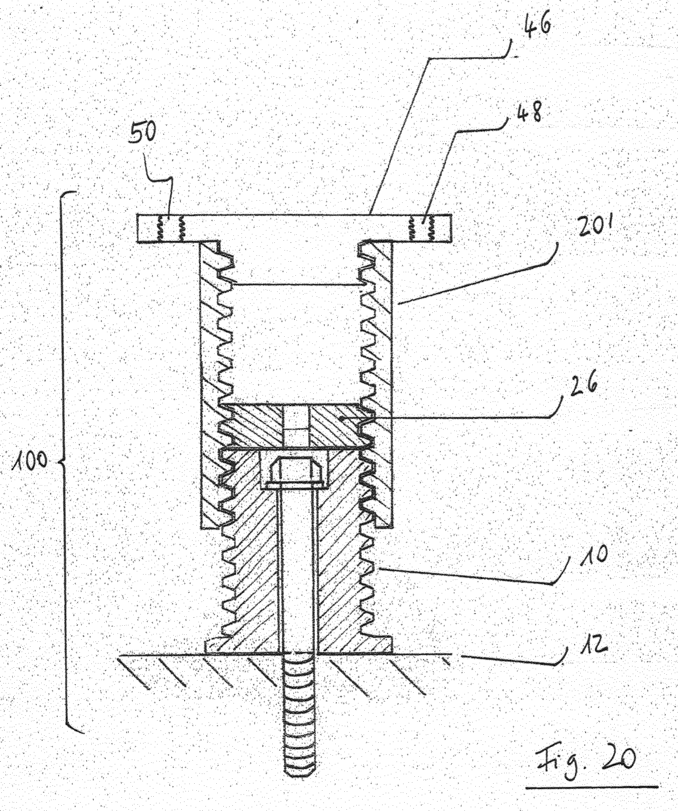

Fig. 20 stellt das fertige, auf die gewünschte Länge angepasste und lagegesicherte Verbindungselement 100 in einem anderen nicht erfindungsgemäßen Ausführungsbeispiel dar. Dabei ist eine Abschlussplatte 46 in das Aufsatzelement 20' eingeschraubt. Die Abschlussplatte 46 weist eine erste Gewindebohrung 48 sowie eine zweite Gewindebohrung 50 auf. Daran können Anbauelemente angeordnet bzw. befestigt werden.

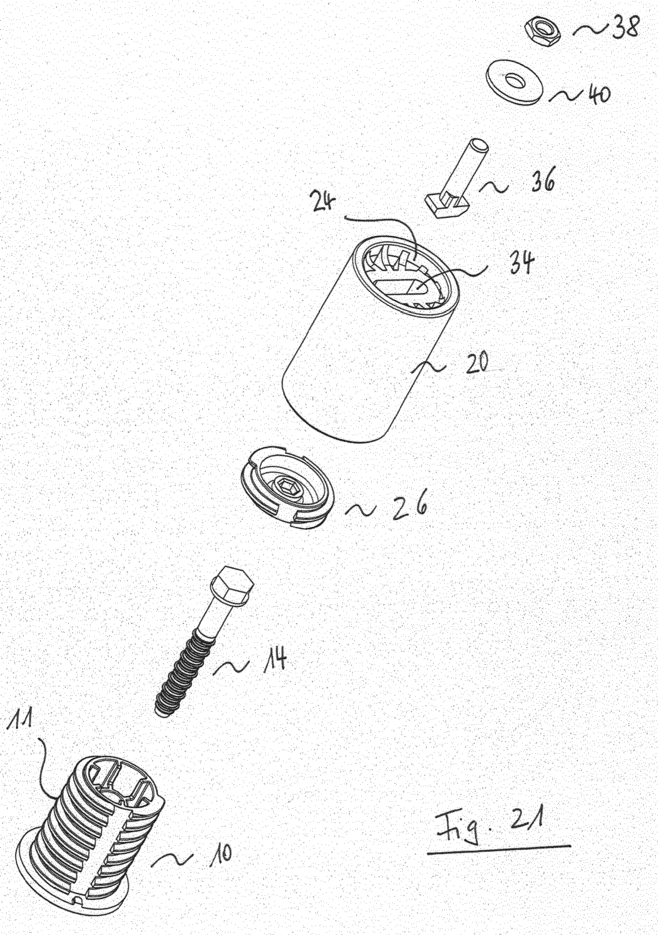

Fig. 21 ist eine Explosionsdarstellung, in der die Bestandteile des Verbindungselements 100 dargestellt sind. Sie zeigt das Grundelement 10, das Befestigungselement 14, das Sicherungselement 26, das Aufsatzelement 20, die Hammerkopfschraube 36, die Unterlegscheibe 40 sowie die Mutter 38. Die Öffnung 34 ist als Langloch ausgebildet, so dass die Hammerkopfschraube 36 eingeführt wird, die für eine Sicherung um 90° gedreht wird. Somit ist die Hammerkopfschraube 36 gegen Herausfallen oder Herausziehen geschützt.

Das Verbindungselement 100 ist somit mehrteilig ausgebildet und weist das Grundelement 10, 10' und 10", das Aufsatzelement 20, 20' sowie eine Verstellmöglichkeit der Länge des gesamten Verbindungselements 100 auf. Zur Längenfeststellbarkeit bzw. Sicherung weist das Verbindungselement 100 das Sicherungselement 26 auf, das reversibel zur Festlegung der Länge L des Verbindungselements 100 angeordnet ist.

Z Die Erfindung wird durch den Umfang der beigefügten Ansprüche definiert.

### Bezugszeichenliste

- 10: Grundelement
- 10': Grundelement
- 10": Grundelement
- 11: Außengewinde
- 12: Tragkonstruktion
- 13: erste Bohrung
- 14: erstes Befestigungsmittel
- 15: Fußbereich
- 15': Fußbereich
- 16: zweites Befestigungsmittel
- 17: zweite Bohrung
- 17': zweite Bohrung
- 18: drittes Befestigungsmittel
- 20: Aufsatzelement
- 20': Aufsatzelement (weiteres, nicht erfindungsgemäßes Beispiel)
- 21: erstes offenes Ende
- 22: Innengewinde
- 22': Innengewinde
- 23: zweites offenes Ende
- 24: erste Öffnung
- 26: Sicherungselement
- 28: dritte Bohrung
- 30: drittes offenes Ende
- 32: Montagemittel
- 34: zweite Öffnung
- 36: Hammerkopfschraube
- 38: Mutter
- 40: Unterlegscheibe
- 42: Schraube
- 44: Befestigungswinkel
- 46: Abschlussplatte
- 48: erste Gewindebohrung
- 50: zweite Gewindebohrung

- 100: Verbindungselement

- A: erster Pfeil
- B: zweiter Pfeil

- D: dritter Pfeil
- E: vierter Pfeil
- F: fünfter Pfeil
- G: sechster Pfeil
- H: siebter Pfeil
- I: achter Pfeil

- L: Länge
- VE: variable Einschraubtiefe

## Patentansprüche

1. Verbindungselement (100) mit einem Grundelement (10, 10', 10") und einem Aufsatzelement (20), wobei das Verbindungselement (100) durch Auswahl einer variablen Anbringtiefe VE längenverstellbar ausgebildet ist, wobei eine Länge L festlegbar ist, und ein Sicherungselement (26) aufweist, mit dem die Länge L reversibel feststellbar ist, wobei die Länge L dadurch festgestellt ist, dass das Sicherungselement (26) am Grundelement (10, 10', 10") anliegt und das Grundelement (10, 10', 10"), das Sicherungselement (26) und das Aufsatzelement (20) über deren jeweiligen Kontaktflächen verspannt sind, **dadurch gekennzeichnet, dass** das Sicherungselement (26) mindestens eine dritte Bohrung (28) aufweist und in eine erste Öffnung (24) und durch eine zweite Öffnung (34) führend eine Hammerkopfschraube (36) eingesetzt und deren Kopf so verdreht angeordnet ist, dass deren Flanken am Aufsatzelement (20) anliegen.

2. Verbindungselement (100) nach Anspruch 1, **dadurch gekennzeichnet, dass** das Grundelement (10, 10', 10") ein Außengewinde (11) und das Aufsatzelement (20) ein Innengewinde (22) aufweist, wobei die Länge L durch Auswahl der variablen Anbringtiefe VE des Aufsatzelements (20) auf das Grundelement (10, 10', 10") festlegbar ist.

3. Verbindungselement (100) nach einem der Ansprüche 1 oder 2, **dadurch gekennzeichnet, dass** das Sicherungselement (26) ein Außengewinde aufweist und in das Aufsatzelement (20) eindrehbar ist.

4. Verbindungselement (100) nach einem der vorhergehenden Ansprüche, **dadurch gekennzeichnet, dass** das Grundelement (10, 10', 10") mindestens eine Ausnehmung (13, 17) oder ein offenes Ende (23) und das Aufsatzelement (20) mindestens eine erste Öffnung (24) aufweist.

5. Verbindungselement (100) nach einem der vorhergehenden Ansprüche, **dadurch gekennzeichnet, dass** das Verbindungselement (100) zur Verbindung einer Gebäudewand oder einer Tragkonstruktion (12) einer Gebäudewand mit einem Anbauelement ausgebildet ist.

6. Verfahren zum Feststellen der Länge eines Verbindungselements (100) nach einem der Ansprüche 1 bis 5, mit folgenden Schritten:
a) Montieren eines Grundelements (10, 10', 10") an einen Untergrund (12) mit mindestens einem Befestigungsmittel (14, 16, 18)
b) Einbringen eines Sicherungselements (26) in ein Aufsatzelement (20)
c) Anbringen des Aufsatzelements (20) mit dem Sicherungselement (26) am Grundelement (10, 10', 10")
d) Wählen der variablen Anbringtiefe VE
e) Festlegen der Länge L des Verbindungselements (100)
f) Anlegen des Sicherungselements (26) an das Grundelement (10, 10', 10") und dadurch Feststellen der Länge L des Verbindungselements (100), wobei im Verfahrensschritt d) die gewünschten Länge L durch die variable Einschraubtiefe VE gewählt wird, indem die Länge der Kontaktierung des Außengewindes (11) des Grundelements (10, 10', 10") zum Innengewinde (22) des Aufsatzelements (20) gewählt wird wobei Z im Verfahrensschritt f) nach dem Festlegen der Länge L in Verfahrensschritt e) das Sicherungselement (26) in Richtung des Grundelements (10, 10', 10") verdreht wird und wobei im Verfahrensschritt f) sich das Grundelement (10, 10'. 10"), das Aufsatzelement (20) und das Sicherungselement (26) gegeneinander verspannen, sobald das Sicherungselement (26) am Grundelement (10, 10', 10") anliegt.

7. Verfahren nach Anspruch 6, **dadurch gekennzeichnet, dass** im Verfahrensschritt b) das Sicherungselement (26) von einem offenen Ende (21) Z des Aufsatzelements (20) her eingedreht wird.

8. Verfahren nach einem der Ansprüche 6 oder 7, **dadurch gekennzeichnet, dass** im Verfahrensschritt c) das Sicherungselement (26) in das Aufsatzelement (20) von Hand oder mit einem Montagemittel eingebracht wird.

9. Verfahren nach einem der Ansprüche 6 bis 8, **dadurch gekennzeichnet, dass** im Verfahrensschritt c) das Einbringen durch Einschrauben erfolgt.

10. Verfahren nach einem der Ansprüche 6 bis 9, **dadurch gekennzeichnet, dass** nach dem Verfahrensschritt f) ein weiterer Verfahrensschritt g) durchgeführt wird, in dem das Aufsatzelement (20) gelöst wird und die Länge L neu eingestellt wird.

## Claims

1. Connection element (100) comprising a main element (10, 10', 10") and an attachment element (20), wherein the connection element (100) is formed by selecting a variable installation depth VE in a length-adjustable manner, wherein it is possible to set a length L, and comprising a securing element (26), by means of which the length L can be reversibly determined, wherein the length L is determined by the securing element (26) abutting the main element (10, 10', 10") and the main element (10, 10', 10"), the securing element (26) and the attachment element (20) being braced via their respective contact surfaces, **characterised in that** the securing element (26) comprises at least one third hole (28), and a hammer-head bolt (36) is inserted by being guided into a first opening (24) and through a second opening (34), and the head of said bolt is arranged so as to be turned such that the sides thereof abut the attachment element (20).

2. Connection element (100) according to claim 1, **characterised in that** the main element (10, 10', 10") comprises an outer thread (11) and the attachment element (20) comprises an inner thread (22), wherein it is possible to set the length L by selecting the variable installation depth VE of the attachment element (20) on the main element (10, 10', 10").

3. Connection element (100) according to any of claims 1 or 2, **characterised in that** the securing element (26) comprises an outer thread and can be screwed into the attachment element (20).

4. Connection element (100) according to any of the preceding claims, **characterised in that** the main element (10, 10', 10") comprises at least one recess (13, 17) or an open end (23) and the attachment element (20) comprises at least one first opening (24).

5. Connection element (100) according to any of the preceding claims, **characterised in that** the connection element (100) is designed to connect a building wall or a supporting construction (12) of a building wall to an add-on element.

6. Method for determining the length of a connection element (100) according to any of claims 1 to 5, comprising the following steps:
a) mounting a main element (10, 10', 10") on a surface (12) using at least one fastening means (14, 16, 18),
b) inserting a securing element (26) into an attachment element (20),
c) installing the attachment element (20) on the main element (10, 10', 10") using the securing element (26),
d) selecting the variable installation depth VE,
e) setting the length L of the connection element (100),
f) applying the securing element (26) to the main element (10, 10', 10") and thereby determining the length L of the connection element (100),
wherein, in method step d), the desired length L is selected by the variable screw-in depth VE in that the length of the contact between the outer thread (11) of the main element (10, 10', 10") and the inner thread (22) of the attachment element (20) is selected,
wherein, in method step f), after setting the length L in method step e), the securing element (26) is turned in the direction of the main element (10, 10', 10") and
wherein, in method step f), the main element (10, 10', 10"), the attachment element (20) and the securing element (26) are braced against one another once the securing element (26) is abutting the main element (10, 10', 10").

7. Method according to claim 6, **characterised in that**, in method step b), the securing element (26) is screwed in from an open end (21) of the attachment element (20).

8. Method according to any of claims 6 or 7, **characterised in that**, in method step c), the securing element (26) is inserted into the attachment element (20) by hand or using a mounting means.

9. Method according to any of claims 6 to 8, **characterised in that**, in method step c), the insertion takes place by screwing in.

10. Method according to any of claims 6 to 9, **characterised in that**, after method step f), another method step, step g), is carried out, in which the attachment element (20) is detached and the length L is recalibrated.

## Revendications

1. Elément de raccordement (100) avec un élément de base (10, 10', 10") et un élément de rehausse (20), dans lequel l'élément de raccordement (100) est réalisé de manière ajustable en longueur par la sélection d'une profondeur d'installation variable VE, dans lequel une longueur L peut être fixée, et présente un élément de blocage (26), avec lequel la longueur L peut être arrêtée de manière réversible, dans lequel la longueur L est arrêtée en ce que l'élément de blocage (26) repose au niveau de l'élément de base (10, 10', 10") et l'élément de base (10, 10', 10"), l'élément de blocage (26) et l'élément de rehausse (20) sont assemblés par serrage par l'intermédiaire de leurs surfaces de contact respectives, **caractérisé en ce que** l'élément de blocage (26) présente au moins un troisième alésage (28) et est inséré dans une première ouverture (24) et en guidant une vis de tête rectangulaire (26) à travers une deuxième ouverture (34) et sa tête est disposée de manière si tournée que ses flancs reposent au niveau de l'élément de rehausse (20).

2. Elément de raccordement (100) selon la revendication 1, **caractérisé en ce que** l'élément de base (10, 10', 10") présente un filetage extérieur (11) et l'élément de rehausse (20) présente un filetage intérieur (22), dans lequel la longueur L peut être fixée par la sélection de la profondeur d'installation variable VE de l'élément de rehausse (20) sur l'élément de base (10, 10', 10").

3. Elément de raccordement (100) selon l'une quelconque des revendications 1 ou 2, **caractérisé en ce que** l'élément de blocage (26) présente un filetage extérieur et peut être inséré par rotation dans l'élément de rehausse (20).

4. Elément de liaison (100) selon l'une quelconque des revendications précédentes, **caractérisé en ce que** l'élément de base (10, 10', 10") présente au moins un évidement (13, 17) ou une extrémité ouverte (23) et l'élément de rehausse (20) présente au moins une première ouverture (24).

5. Elément de raccordement (100) selon l'une quelconque des revendications précédentes,
**caractérisé en ce que** l'élément de raccordement (100) est réalisé pour raccorder une paroi de bâtiment ou une structure porteuse (12) d'une paroi de bâtiment à un élément de construction rapporté.

6. Procédé pour arrêter la longueur d'un élément de raccordement (100) selon l'une quelconque des revendications 1 à 5, avec des étapes suivantes :
a) le montage d'un élément de base (10, 10', 1 0") au niveau d'un sol (12) avec au moins un moyen de fixation (14, 16, 18)
b) l'introduction d'un élément de blocage (26) dans un élément de rehausse (20)
c) l'installation de l'élément de rehausse (20) avec l'élément de blocage (26) au niveau de l'élément de base (10, 10', 10")
d) la sélection de la profondeur d'installation variable VE
e) la fixation de la longueur L de l'élément de raccordement (100)
f) le placement de l'élément de blocage (26) au niveau de l'élément de base (10, 10', 10"), et ainsi l'arrêt de la longueur L de l'élément de raccordement (100),
dans lequel lors de l'étape de procédé d), la longueur L souhaitée est sélectionnée par la profondeur de vissage variable VE en ce que la longueur de la mise en contact du filetage extérieur (11) de l'élément de base (10, 10', 10") est sélectionnée par rapport au filetage intérieur (22) de l'élément de rehausse (20),
dans lequel lors de l'étape de procédé f), après la fixation de la longueur L lors de l'étape de procédé e), l'élément de blocage (26) est tourné en direction de l'élément de base (10, 10', 10") et
dans lequel lors de l'étape de procédé f), l'élément de base (10, 10', 10"), l'élément de rehausse (20) et l'élément de blocage (26) sont assemblés par serrage les uns contre les autres dès que l'élément de blocage (26) repose au niveau de l'élément de base (10, 10', 10").

7. Procédé selon la revendication 6, **caractérisé en ce que** lors de l'étape de procédé b), l'élément de blocage (26) est inséré par rotation depuis une extrémité ouverte (21) de l'élément de rehausse (20).

8. Procédé selon l'une quelconque des revendications 6 ou 7, **caractérisé en ce que** lors de l'étape de procédé c), l'élément de blocage (26) est introduit dans l'élément de rehausse (20) à la main ou avec un moyen de montage.

9. Procédé selon l'une quelconque des revendications 6 à 8, **caractérisé en ce que** lors de l'étape de procédé c), l'introduction est effectuée par vissage.

10. Procédé selon l'une quelconque des revendications 6 à 9, **caractérisé en ce qu'**après l'étape de procédé f), une autre étape de procédé g) est mise en œuvre, dans laquelle l'élément de rehausse (20) est desserré est la longueur L est à nouveau réglée.
